# EUROPEAN PATENT SPECIFICATION

(11) **EP 1 895 715 B1**
(45) Date of publication and mention of the grant of the patent: **07.05.2014**
(21) Application number: 07107852.1
(22) Date of filing: 09.05.2007
(51) Int. Cl.: H04L 12/24

(54) **Managing substitute services in a UPnP home network**
Verwaltung Ersetzungsdienste in einem UPnP-Heimnetzwerk
Gestion de services de substitution dans un réseau domestique UPnP

(30) Priority: 30.08.2006 KR 20060082937
(43) Date of publication of application: 05.03.2008
(73) Proprietor: Samsung Electronics Co., Ltd., Suwon-si, Gyeonggi-do, 443-742 (KR)
(72) Inventor: Son, Kyoung-ho, Gyeonggi-do (KR)
(74) Representative: Walaski, Jan Filip

(56) References cited:
- EP-A2- 1 058 421
- US-A1- 2001 037 476
- US-A1- 2004 103 185
- BODLAENDER M P: "UPnP 1.1 - Designing for Performance & Compatibility" IEEE TRANSACTIONS ON CONSUMER ELECTRONICS, IEEE SERVICE CENTER, NEW YORK, NY, US, 20 December 2004 (2004-12-20), pages 69-75, XP003022762

## Description

Methods and apparatuses consistent with the present invention relate to a home network, and more particularly, to a method for effectively providing services of home network devices to users in a home network.

As research into and standardization of home network technologies has progressed, an environment in which users can operate various home network devices using a single remote controller in the home is increasingly required. For example, in an environment in which a home network is established, a user can receive digital content from various network devices, such as a personal computer, a DVD player, etc., and watch the received digital content on a television.

Meanwhile, as various digital devices have become widely popular and a convergence phenomenon of such digital devices has been accelerated, instances of several devices providing the same or similar services in a home has increased. For example, two or more digital televisions installed in a home is commonplace.

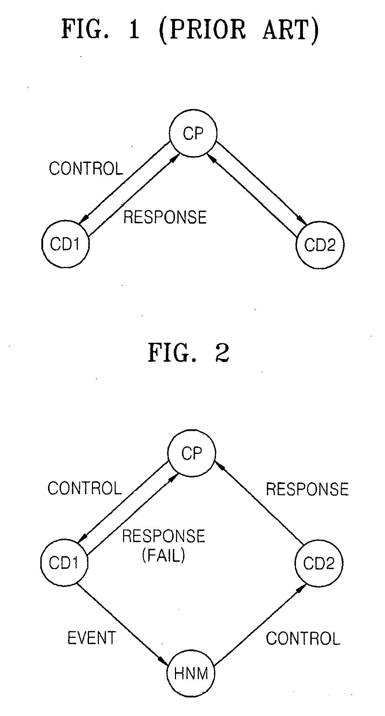

Figure 1 is a view for explaining a method of using services provided by devices in a general home network.

A user controls a control point (for example, a remote controller) including a user interface, thereby controlling a home network device, that is, a controlled device. The controlled device receives a service request from the control point, and informs the control point whether the corresponding service was successfully transmitted, through a response message.

For example, as illustrated in Figure 1, a control point CP can control a controlled device CD1 and a controlled device CD2, thus using services of the respective controlled devices CD1 and CD2. In this example, it is assumed that the controlled device CD1 and the controlled device CD2 provide the same service. When a user requests a service of the controlled device CD1, if a response indicating that the corresponding service is not available is received, the user has to search for a device of the same type as the controlled device CD1. If the controlled device CD2 is searched for, it is determined whether the controlled device CD2 and the controlled device CD1 can provide the same service. If it is determined that the controlled device CD2 provides the same service, the user has to again request the service to the controlled device CD2.

US 2001/037476 A1 discloses a system including a plurality of equivalent services, the client to automatically select a proxy service replacing a failed service, thereby enabling the client to enjoy the improved usability by the redundant configuration without complicating the process of the client.

US 2004/103185 A1 discloses a method for replacing a service in a distributed application, a mirror service is used for substituting the service when the service is determined to have stopped providing an acceptable level of service, the mirror service being determined based on directive information that includes hint information and constraint information, the constraint information defining rigid service rules and the hint information providing suggestive information relating to services.

That is, in a related art home network, when a user controls a control point and uses a service of a controlled device, if the controlled device cannot provide the service, the user has to search for a different controlled device and again request the service from the different controlled device.

The present invention provides methods, a computer readable recording medium and an apparatus as claimed in the independent claims.

Preferred embodiments are covered by the dependent claims.

The above and other aspects of the present invention will become more apparent by describing in detail exemplary embodiments thereof with reference to the attached drawings in which:
Figure 1 is a view for explaining a method of using services provided by devices in a related art home network;
Figure 2 is a view for explaining a method of using a substitute service in a home network, according to an exemplary embodiment of the present invention;
Figure 3 is a flowchart illustrating a method in which a home network management apparatus manages services provided by devices, according to an exemplary embodiment of the present invention;
Figure 4 illustrates a structure of a service management database generated by a home network management apparatus, according to an exemplary embodiment of the present invention;
Figure 5 is a view for explaining a process in which a substitute service is provided in a home network, according to an exemplary embodiment of the present invention;
Figure 6 illustrates a home network environment according to an exemplary embodiment of the present invention; and
Figure 7 is a block diagram of a home network management apparatus according to an exemplary embodiment of the present invention.

Hereinafter, exemplary embodiments of the present invention will be described in detail with reference to the appended drawings.

In this specification, it is assumed that the home network is a Universal Plug and Play (UPnP) home network. UPnP allows communication between devices connected to a network, without complicated settings between the devices. UPnP allows a device to automatically search for a service belonging to a different device. In a UpnP home network, when a user only connects a device to the UPnP home network, other devices connected to the UPnP home network automatically find the newly connected device and perform various processes required for communication through information exchange. Accordingly, since UPnP allows easy installation of home network devices, UPnP is regarded as a core middleware for estimating a home network.

Figure 2 is a view for explaining a method of using a substitute service in a home network, according to an exemplary embodiment of the present invention.

In Figure 2, like Figure 1, it is assumed that a first controlled device CD1 and a second controlled device CD2 provide the same service.

When a user requests a service to the first controlled device CD1 using a control point CP, if a response message indicating that the corresponding service is not provided is received from the first controlled device CD1, a home network management apparatus HNM according to an exemplary embodiment of the present invention receives the response message as an event message.

When a change occurs in a variable indicating a status of a service provided by a controlled device in a UPnP network, an event message is used to notify the change to a device which subscribes for event messages. Accordingly, the home network management apparatus HNM has to subscribe for event messages from all of the controlled devices in a home network.

If the home network management apparatus recognizes that the first controlled device CD1 cannot provide the service by receiving the event message from the first controlled device CD1, the home network management apparatus HNM determines whether a device providing a service capable of substituting for the service of the first controlled device CD1 exists in the home network. If the second controlled device CD2 is located, the home network management apparatus HNM requests the corresponding service from the second controlled device CD2, together with service request content (that is, a status variable, etc. included in a control message which the control point CP transfers to the first controlled device CD1) recognizable through the event message. Since the control message for requesting the service includes information indicating that the service is requested by the control point CP, the second controlled device CD2 transmits to the control point CP a response message indicating whether the service is successfully provided. It is also possible that the home network management apparatus HNM receives the response message from the second controlled device CD2 and transmits it to the control point CP.

In Figure 2, the home network management apparatus HNM is shown as a separate device. However, it will be understood by those of ordinary skill in the art that the home network management apparatus HNM according to the exemplary embodiments of the present invention is a functional component (for example, the control point CP) capable of being included in a different home network device.

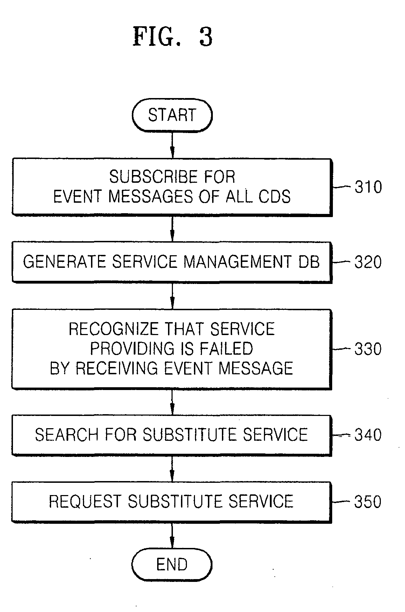

Figure 3 is a flowchart illustrating a method in which a home network management apparatus manages services provided by devices, according to an exemplary embodiment of the present invention.

In operation 310, the home network management apparatus subscribes for event messages with respect to all of the controlled devices in a home network. The home network management apparatus subscribes for event messages with respect to controlled devices newly connected to the home network, as well as with respect to controlled devices already in the home network.

In operation 320, the home network management apparatus generates a service management database, wherein information for generating the service management database can be obtained by a UPnP description document. That is, if the home network management apparatus is initially connected to the home network, the home network management apparatus receives UPnP description documents for all controlled devices in the home network and generates the service management database with reference to the UPnP description documents. The service management database maps substitute services capable of respectively substituting for services, to addresses of controlled devices that provide the substitute services, and stores the results. "Substitute services" refer to services that can be substantially compatible with the corresponding services and do not indicate services provided by the same product with the same specification. In the UPnP description document, services capable of being used with the same type of device and services of the same type can be considered as substitutable services.

Meanwhile, when a new controlled device is connected to the home network while the home network management apparatus is connected to the home network, the home network management apparatus checks a device type and a service type of the new controlled device through a UPnP description document of the new controlled device, and updates the service management database. That is, if the same device type as the device type of the new controlled device does not exist in the service management database, the home network management apparatus newly registers the device type of the new controlled device, and if the same device type as the device type of the new controlled device exists in the service management database, the home network management apparatus searches for a service (services) capable of substituting for a service of the new controlled device from services mapped to the device type. If no service capable of substituting for the service of the new controlled device exists in the service management database, the home network management apparatus registers the service of the new controlled device as a new service, and if a service (services) capable of substituting for the service of the new controlled device exists in the service management database, the home network management apparatus maps the service of the new controlled device to an address of the new controlled device.

In operation 330, the home network management apparatus receives an event message indicating that provision of the service has failed. That is, since the home network management apparatus has subscribed for event messages from all of the controlled devices in operation 310, the home network management apparatus can recognize that a certain controlled device fails to respond to a service request from a control point. Here, the event message includes all contents of a response message which the controlled device which cannot provide the service transfers to the control point requesting the service.

In operation 340, the home network management apparatus searches for a substitute service capable of substituting for the service requested by the control point with reference to the service management database.

Then, in operation 350, the home network management apparatus requests the substitute service from a controlled device that provides the substitute service.

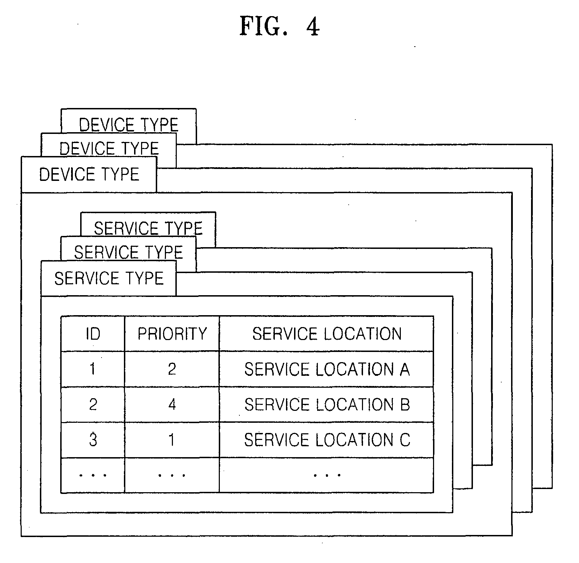

Figure 4 illustrates the structure of the service management database generated by the home network management apparatus, according to an exemplary embodiment of the present invention.

As illustrated in Figure 4, related service types are mapped to device types of controlled devices belonging to a home network. Also, if a plurality of substitute services are mapped to the same device type, the substitute services are mapped to address information of devices that provide the substitute services. That is, in Figure 4, service locations A, B, C, ... refer to address information of the devices.

If three or more substitute services exist, that is, if a plurality of substitute services exist with respect to a service, it is preferable that priority is assigned to the plurality of substitute services. Priority of the substitute services can be set, according to a network response speed of each of a plurality of devices that provide the substitute services and/or a hardware specification of each of the devices that provide the substitute services.

Also, priority of the substitute services can be set arbitrarily by a user through a user interface.

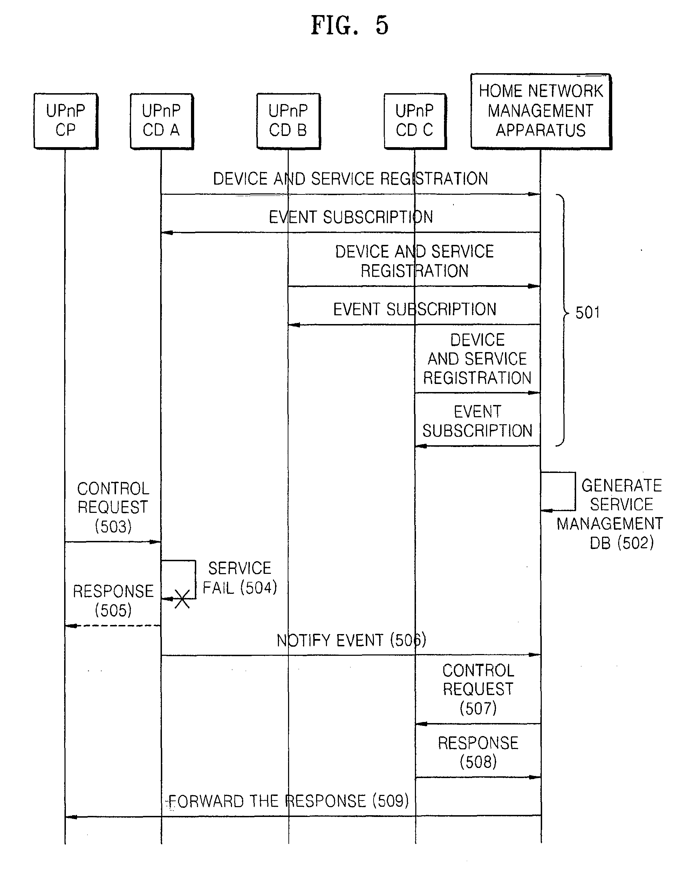

Figure 5 is a view for explaining a process in which a substitute service is provided in a home network, according to an exemplary embodiment of the present invention. In Figure 5, it is assumed that in the home network, a controlled device A, a controlled device B, and a controlled device C provide the same service.

In operation 501, a home network management apparatus finds controlled devices in the home network, receives UPnP description documents from the controlled devices, and subscribes for event messages from all of the controlled devices.

In operation 502, the home network apparatus generates (or updates) a service management database with reference to the UPnP description documents received from the controlled devices.

In operation 503, a control point transmits a control message for requesting a service to the controlled device A.

In operation 504, when the controlled device A fails to provide the service, the controlled device A transmits a response message indicating the failure to provide the service to the control point, in operation 505, and simultaneously transmits an event message to the home network management apparatus, in operation 506. As described above, content included in the response message transmitted in operation 505 is included in the event message transmitted in operation 506.

In operation 507, the home network management apparatus searches for a substitute service and requests the substitute service from the controlled device C. That is, although the controlled devices A, B, and C can provide the substitute service, the home network management apparatus transmits the control message to the controlled device C having the highest priority with reference to the service management database. Here, variables required for requesting the substitute service are the same as variables included in the control message transmitted in operation 503. The variables are included in the event message transmitted in operation 506 and transmitted to the home network management apparatus.

In operation 508, the controlled device C, which receives the substitute service request, transmits to the home network management apparatus a response message indicating whether the substitute service is successfully provided. In operation 509, the home network management apparatus forwards the response message to the control point.

It is also possible that the controlled device C directly transmits a response message to the control point instead of the home network management apparatus when the control message transmitted in operation 507 is equal to the control message transmitted in operation 503.

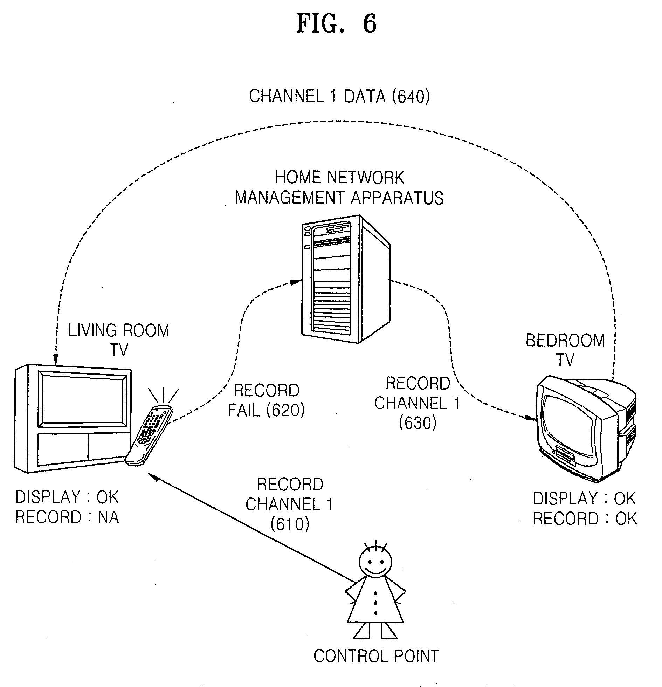

Figure 6 illustrates a home network environment according to an exemplary embodiment of the present invention.

In the current exemplary embodiment, it is assumed that a TV located in a living room can provide a broadcast display service and cannot provide a recording service due to errors, but a TV located in a bedroom can provide both a broadcast display service and a recording service, when a user wants to record a channel No.1 while watching it on the living room TV.

In operation 610, the user, who does not recognize that the living room TV cannot provide the recording service, requests the recording service from the living room TV using a remote controller (that is, a control point). In operation 620, the living room TV informs a home network management apparatus that the recording service cannot be provided by the living room TV, through an event message.

In operation 630, the home network management apparatus searches for a substitute service with reference to the event massage, recognizes that the bedroom TV can provide the recording service, and requests the bedroom TV to record the channel No. 1 using variables included in the event message.

In operation 640, if recording of the channel No. 1 is complete, recorded data stored in the bedroom TV is transmitted to the living room TV through the home network. If the recorded data is transmitted to the living room TV, the user can watch his or her desired broadcast on the living room TV.

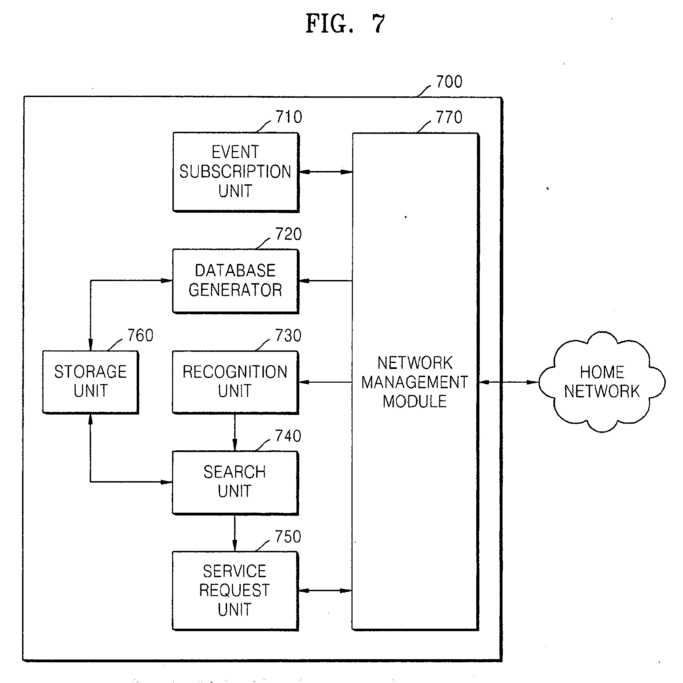

Figure 7 is a block diagram of a home network management apparatus 700 according to an exemplary embodiment of the present invention.

Referring to Figure 7, the home network management apparatus 700 includes an event subscription unit 710, a database generator 720, a recognition unit 730, a search unit 740, a service request unit 750, a storage unit 760, and a network management module 770.

The event subscription unit 710 subscribes for event messages of all controlled devices connected to a home network.

The database generator 720 generates a service management database so that the home network management apparatus 700 can find a substitute service (substitute services) with respect to a service (services) provided through the home network, with reference to UPnP description documents received from the controlled devices in the home network. As described above, if a plurality of substitute services exist with respect to a service, priority of the substitute services can be set, according to network response speeds of respective devices that provide the plurality of substitute services and/or hardware specifications of the respective devices that provide the plurality of substitute services. Also, priority of the substitute services can be set based on a value input through a user interface (not shown). The service management database is stored in the storage unit 760.

The recognition unit 730 recognizes that a controlled device cannot provide a requested service, through an event message received from the controlled device, and requests the search unit 740 to search for a substitute service.

The search unit 740 searches for a substitute service for a service specified by the event message, with reference to the service management database. If the corresponding substitute service is searched for, the search unit 740 transfers information required for requesting the substitute service to the service request unit 750.

The service request unit 750 requests the substitute service using the information received from the search unit 750.

The network management module 770 performs basic connection management so that all devices in the home network can communicate with each other. That is, in a UPnP home network, the network management module 770 executes basic protocols, such as Simple Object Access Protocol (SOAP), Simple Service Discovery Protocol (SSDP), etc., and receives or transmits messages related to respective operations for UPnP networking.

Meanwhile, the present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

As described above, according to the exemplary embodiments of the present invention, when a device from which a user requests a service cannot provide the service in a home network including a plurality of devices, the user does not need to directly search for a different device and again request the service.

Also, by combining a plurality of substitute services that are provided to a plurality of devices in a home network with each other, on the basis of priority of the substitute services set according to the performance of the devices, users can be optimized.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method for a home network management apparatus (700) to manage a Universal plug and play, UPnP, home network, the method comprising:
maintaining a service management database of a plurality of devices in the home network which are capable of providing substitute services (320);
receiving an event message indicating that a first device has failed to provide a service requested by a second device, the event message including service request content (330);
searching the service management database for a substitute service among a plurality of services provided by the plurality of devices in the home network on the basis of the service request content (340);
sending a substitution request to a third device requesting provision of the substitute service, according to a result of the searching step; wherein the substitution request includes the service request content from the received event message (350).

2. The method of claim 1, wherein the step of recognizing comprises receiving an event message from the first device.

3. The method claim 2, wherein the event message includes variables required for requesting the substitute service.

4. The method of claim 3, wherein the step of requesting the substitute service includes providing the required variables to the third device.

5. The method of any one of the preceding claims, wherein the step of searching comprises:
searching a database in which the substitute service and an address of the device which provides the substitute service are mapped with respect to each of the services provided by the devices in the home network.

6. The method of claim 5, wherein, if a plurality of substitute services exist in correspondence to the requested service, the database includes a priority for each of the substitute services.

7. The method of claim 6, wherein the priority is set according to network response speeds of a plurality of devices that provide the substitute services or hardware specifications of the devices that provide the substitute services.

8. The method of claim 6, wherein, the priority is set according to a user input.

9. The method of claim 1, further comprising subscribing for event messages for the services provided by the devices in the home network, wherein the recognizing that the first device fails to provide the service requested by the second device comprises receiving an event message from the first device.

10. A method of generating a service management database for managing an Universal plug and play, UPnP, home network comprising:
receiving Universal plug and play, UPnP, service information from a plurality of devices in the home network, the service information indicating services which can be carried out by each device (310);
generating the database in which a substitute service and an address of a device which provides the substitute service are mapped with respect to each of the services provided by the devices in the home network (320).

11. The method of claim 10, wherein generating the database comprises setting priorities for devices mapped to each service.

12. The method of claim 11, wherein the priorities are set based on network response speeds or hardware specifications of the devices.

13. The method of any one of claims 10 to 12, wherein the home network is a Universal Plug and Play, UPnP, network, and the service information is included in a plurality of UPnP description documents received from the devices in the home network.

14. A computer readable recording medium having embodied thereon a computer program for executing a method according to any one of the preceding claims, when executed on a computer.

15. An apparatus for managing a Universal plug and play, UPnP, home network, the apparatus comprising:
a database generator (720) configured to receive Universal plug and play (UPnP) service information from a plurality of devices in the home network, and to generate a database indicating substitute services which can be carried out by each device;
a recognition unit (730) configured to receiving an event message indicating that a first device has failed to provide a service requested by a second device, the event message including service request content;
a search unit (740) configured to search the database for a substitute service among a plurality of services provided by the plurality of devices in the home network; and
a service request unit (750) configured to request the substitute service from a third device which provides the substitute service, according to a result of the search by the search unit (740), wherein the request includes the service request content from the received event message.

16. The apparatus of claim 15, further comprising a storage unit (760) having a database stored therein, in which a substitute service and an address of a device which provides the substitute service are mapped with respect to each of the services provided by the devices in the home network;
wherein the search unit (740) searches for the substitute service with reference to the database.

17. The apparatus of claim 16, further comprising a database generator (720) configured to generate the database when the apparatus is connected to the home network and/or to update the database when a new device is connected to the network.

18. The apparatus of claim 17, wherein the home network is a Universal Plug and Play, UPnP, network, and the database generator (720) is configured to generate and/or update the database with reference to UPnP description documents received from the devices in the home network.

19. The apparatus of claim 17 or 18, wherein, if a plurality of substitute services exist in correspondence to a service, the database generator (720) sets a priority for each of the substitute services.

20. The apparatus of claim 19, wherein the database generator (720) sets the priority according to network response speeds of a plurality of devices that provide the substitute services or hardware specifications of the devices that provide the substitute services.

21. The apparatus of claim 19, wherein the database generator (720) sets a priority for devices that provide the substitute services, according to a user input.

22. The apparatus of any one of claims 15 to 21, further comprising an event subscribing unit (710) configured to subscribe for event messages for the services provided by the devices in the home network, wherein the home network is a Universal Plug and Play network, and the recognition unit recognizes that the first device fails to provide the service requested by the second device with reference to a message received from the first device.

## Patentansprüche

1. Verfahren für ein Heimnetzwerk-Verwaltungsgerät (700) zum Verwalten eines universellen Plug-and-Play- bzw. UPnP-Heimnetzwerks, das Verfahren umfassend:
Führen einer Dienstverwaltungsdatenbank einer Vielzahl von Vorrichtungen in dem Heimnetzwerk, die imstande sind, Ersatzdienste (320) bereitzustellen;
Empfangen einer Ereignismeldung, die angibt, dass eine erste Vorrichtung versagt hat, einen von einer zweiten Vorrichtung angeforderten Dienst bereitzustellen, wobei die Ereignismeldung Dienstanforderungsinhalt (330) enthält;
Durchsuchen der Dienstverwaltungsdatenbank nach einem Ersatzdienst unter einer Vielzahl von Diensten, bereitgestellt von der Vielzahl von Vorrichtungen in dem Heimnetzwerk, auf der Basis des Dienstanforderungsinhalts (340);
Senden einer Ersetzungsanforderung an eine dritte Vorrichtung, die Bereitstellung des Ersatzdienstes anfordert, gemäß einem Ergebnis des Suchschritts; wobei die Ersetzungsanforderung den Dienstanforderungsinhalt aus der empfangenen Ereignismeldung (350) enthält.

2. Verfahren nach Anspruch 1, wobei der Schritt des Erkennens umfasst, eine Ereignismeldung von der ersten Vorrichtung zu empfangen.

3. Verfahren nach Anspruch 2, wobei die Ereignismeldung Variable enthält, die zum Anfordern des Ersatzdienstes erforderlich sind.

4. Verfahren nach Anspruch 3, wobei der Schritt des Anforderns des Ersatzdienstes enthält, die erforderlichen Variablen der dritten Vorrichtung bereitzustellen.

5. Verfahren nach einem der vorstehenden Ansprüche, wobei der Schritt des Durchsuchens umfasst:
Durchsuchen einer Datenbank, in der der Ersatzdienst und eine Adresse der Vorrichtung, die den Ersatzdienst bereitstellt, unter Bezug auf jeden der von den Vorrichtungen in dem Heimnetzwerk bereitgestellten Dienste abgebildet sind.

6. Verfahren nach Anspruch 5, wobei, wenn eine Vielzahl von Ersatzdiensten in Korrespondenz zu dem angeforderten Dienst existiert, die Datenbank eine Priorität für jeden der Ersatzdienste enthält.

7. Verfahren nach Anspruch 6, wobei die Priorität gemäß Netzwerk-Reaktionsgeschwindigkeiten einer Vielzahl von Vorrichtungen, die die Ersatzdienste bereitstellen, oder Hardware-Spezifikationen der Vorrichtungen, die die Ersatzdienste bereitstellen, eingestellt wird.

8. Verfahren nach Anspruch 6, wobei die Priorität gemäß einer Benutzereingabe eingestellt wird.

9. Verfahren nach Anspruch 1, ferner umfassend, Ereignismeldungen für die von den Vorrichtungen in dem Heimnetzwerk bereitgestellten Dienste zu abonnieren, wobei das Erkennen, dass die erste Vorrichtung versagt, den von der zweiten Vorrichtung angeforderten Dienst bereitzustellen, umfasst, eine Ereignismeldung von der ersten Vorrichtung zu empfangen.

10. Verfahren zum Erzeugen einer Dienstverwaltungsdatenbank zum Verwalten eines universellen Plug-and-Play- bzw. UPnP-Heimnetzwerks, umfassend:
Empfangen universeller Plug-and-Play- bzw. UPnP-Dienstinformationen von einer Vielzahl von Vorrichtungen in dem Heimnetzwerk, wobei die Dienstinformationen Dienste angeben, die von jeder Vorrichtung (310) ausgeführt werden können;
Erzeugen der Datenbank, in der ein Ersatzdienst und eine Adresse einer Vorrichtung, die den Ersatzdienst bereitstellt, unter Bezug auf jeden der von den Vorrichtungen in dem Heimnetzwerk (320) bereitgestellten Dienste abgebildet werden.

11. Verfahren nach Anspruch 10, wobei Erzeugen der Datenbank umfasst, Prioritäten für auf jeden Dienst abgebildete Vorrichtungen einzustellen.

12. Verfahren nach Anspruch 11, wobei die Prioritäten basierend auf Netzwerk-Reaktionsgeschwindigkeiten oder Hardware-Spezifikationen der Vorrichtungen eingestellt werden.

13. Verfahren nach einem der Ansprüche 10 bis 12, wobei das Heimnetzwerk ein universelles Plug-and-Play- bzw. UPnP-Netzwerk ist und die Dienstinformationen in einer Vielzahl von UPnP-Beschreibungsdokumenten, empfangen von den Vorrichtungen in dem Heimnetzwerk, enthalten sind.

14. Computerlesbares Aufzeichnungsmedium, darauf aufweisend ein Computerprogramm zum Ausführen eines Verfahrens nach einem der vorstehenden Ansprüche, wenn es in einem Computer ausgeführt wird.

15. Gerät zum Verwalten eines universellen Plug-and-Play- bzw. UPnP-Heimnetzwerks, das Gerät umfassend:
eine Datenbank-Erzeugungsvorrichtung (720), konfiguriert zum Empfangen von universellen Plug-and-Play- bzw. UPnP-Dienstinformationen von einer Vielzahl von Vorrichtungen in dem Heimnetzwerk und zum Erzeugen einer Datenbank, die Ersatzdienste angibt, die von jeder Vorrichtung ausgeführt werden können;
eine Erkennungseinheit (730), konfiguriert zum Empfangen einer Ereignismeldung, die angibt, dass eine erste Vorrichtung versagt hat, einen von einer zweiten Vorrichtung angeforderten Dienst bereitzustellen, wobei die Ereignismeldung Dienstanforderungsinhalt enthält;
eine Sucheinheit (740), konfiguriert zum Durchsuchen der Datenbank nach einem Ersatzdienst unter einer Vielzahl von Diensten, die von der Vielzahl von Vorrichtungen in dem Heimnetzwerk bereitgestellt werden; und
eine Dienstanforderungseinheit (750), konfiguriert zum Anfordern des Ersatzdienstes von einer dritten Vorrichtung, die den Ersatzdienst bereitstellt, gemäß einem Ergebnis der Suche durch die Sucheinheit (740), wobei die Anforderung den Dienstanforderungsinhalt aus der empfangenen Ereignismeldung enthält.

16. Gerät nach Anspruch 15, ferner umfassend eine Speichereinheit (760), die eine darin gespeicherte Datenbank aufweist, in der ein Ersatzdienst und eine Adresse einer Vorrichtung, die den Ersatzdienst bereitstellt, unter Bezug auf jeden der von den Vorrichtungen in dem Heimnetzwerk bereitgestellten Dienste abgebildet sind;
wobei die Sucheinheit (740) unter Bezugnahme auf die Datenbank nach dem Ersatzdienst sucht.

17. Gerät nach Anspruch 16, ferner umfassend eine Datenbank-Erzeugungsvorrichtung (720), konfiguriert zum Erzeugen der Datenbank, wenn das Gerät mit dem Heimnetzwerk verbunden ist, und/oder zum Aktualisieren der Datenbank, wenn eine neue Vorrichtung mit dem Netzwerk verbunden ist.

18. Gerät nach Anspruch 17, wobei das Heimnetzwerk ein universelles Plug-and-Play- bzw. UPnP-Netzwerk ist und die Datenbank-Erzeugungsvorrichtung (720) konfiguriert ist, die Datenbank unter Bezugnahme auf von den Vorrichtungen in dem Heimnetzwerk empfangenen UPnP-Beschreibungsdokumenten zu erzeugen und/oder zu aktualisieren.

19. Gerät nach Anspruch 17 oder 18, wobei, wenn eine Vielzahl von Ersatzdiensten in Korrespondenz zu einem Dienst existiert, die Datenbank-Erzeugungsvorrichtung (720) eine Priorität für jeden der Ersatzdienste einstellt.

20. Gerät nach Anspruch 19, wobei die Datenbank-Erzeugungsvorrichtung (720) die Priorität gemäß Netzwerk-Reaktionsgeschwindigkeiten einer Vielzahl von Vorrichtungen, die die Ersatzdienste bereitstellen, oder Hardware-Spezifikationen der Vorrichtungen, die die Ersatzdienste bereitstellen, einstellt.

21. Gerät nach Anspruch 19, wobei die Datenbank-Erzeugungsvorrichtung (720) eine Priorität für Vorrichtungen, die die Ersatzdienste bereitstellen, gemäß einer Benutzereingabe einstellt.

22. Gerät nach einem der Ansprüche 15 bis 21, ferner umfassend eine Ereignisabonnierungseinheit (710), konfiguriert zum Abonnieren von Ereignismeldungen für die von den Vorrichtungen in dem Heimnetzwerk bereitgestellten Dienste, wobei das Heimnetzwerk ein universelles Plug-and-Play-Netzwerk ist und die Erkennungseinheit erkennt, dass die erste Vorrichtung versagt, den von der zweiten Vorrichtung angeforderten Dienst bereitzustellen, unter Bezugnahme auf eine von der ersten Vorrichtung empfangenen Nachricht.

## Revendications

1. Procédé pour permettre à un appareil de gestion de réseau domestique (700) de gérer un réseau domestique UPnP (Universal plug and play), ce procédé comprenant :
le maintien d'une base de données de gestion des services d'une pluralité de dispositifs dans le réseau domestique qui sont capables de fournir des services de substitution (320)
la réception d'un message d'évènement indiquant qu'un premier dispositif a été incapable de fournir un service demandé par un deuxième dispositif, ce message d'évènement comprenant le contenu de la demande de service (330),
la recherche, dans la base de données de gestion des services, d'un service de substitution parmi une pluralité de services fournis par la pluralité de dispositifs dans le réseau domestique en se basant sur le contenu de la demande de service (340),
l'envoi d'une demande de substitution à un troisième dispositif demandant la fourniture du service de substitution, selon un résultat de l'étape de recherche ; cette demande de substitution comprenant le contenu de la demande de service venant du message d'évènement reçu (350).

2. Procédé selon la revendication 1, dans lequel l'étape de reconnaissance comprend la réception d'un message d'évènement venant du premier dispositif.

3. Procédé selon la revendication 2, dans lequel le message d'évènement comprend les variables requises pour demander le service de substitution.

4. Procédé selon la revendication 3, dans lequel l'étape de demande du service de substitution comprend la fourniture des variables requises au troisième dispositif.

5. Procédé selon l'une quelconque des revendications précédentes, dans lequel l'étape de recherche comprend :
la recherche dans une base de données dans laquelle le service de substitution et une adresse du dispositif qui fournit le service de substitution sont mis en correspondance par rapport à chacun des services fournis par les dispositifs dans le réseau domestique.

6. Procédé selon la revendication 5, dans lequel, si une pluralité de services de substitution existent en correspondance avec le service demandé, la base de données comprend une priorité pour chacun des services de substitution.

7. Procédé selon la revendication 6, dans lequel la priorité est établie selon les vitesses de réponse du réseau d'une pluralité de dispositifs qui fournissent les services de substitution, ou selon les spécifications matérielles des dispositifs qui fournissent les services de substitution.

8. Procédé selon la revendication 6, la priorité étant établie selon une entrée d'utilisateur.

9. Procédé selon la revendication 1, comprenant en outre la souscription à des messages d'évènements pour les services fournis par les dispositifs dans le réseau domestique, dans lequel la reconnaissance que le premier dispositif est incapable de fournir le service demandé par le deuxième dispositif comprend la réception d'un message d'évènement venant du premier dispositif.

10. Procédé de génération d'une base de données de gestion des services pour gérer un réseau domestique UPnP (Universal plug and play), comprenant :
la réception d'informations sur les services UPnP provenant d'une pluralité de dispositifs dans le réseau domestique, ces informations sur les services indiquant les services qui peuvent être fournis par chaque dispositif (310) ;
la génération de la base de données dans laquelle un service de substitution et une adresse d'un dispositif qui fournit le service de substitution sont mis en correspondance par rapport à chacun des services fournis par les dispositifs dans le réseau domestique (320).

11. Procédé selon la revendication 10, dans lequel la génération de la base de données comprend l'établissement de priorités pour les dispositifs mis en correspondance avec chaque service.

12. Procédé selon la revendication 11, dans lequel les priorités sont établies en se basant sur les vitesses de réponse du réseau ou sur les spécifications matérielles des dispositifs.

13. Procédé selon l'une quelconque des revendications 10 à 12, dans lequel le réseau domestique est un réseau UPnP (Universal Plug and Play) et les informations sur les services sont comprises dans une pluralité de documents de description UPnP reçus des dispositifs dans le réseau domestique.

14. Support d'enregistrement lisible par ordinateur ayant incorporé sur lui un programme informatique pour exécuter un procédé selon l'une quelconque des revendications précédentes lorsqu'il est exécuté sur un ordinateur.

15. Appareil pour gérer un réseau domestique UPnP (Universal plug and play), cet appareil comprenant :
un générateur de base de données (720) configuré de façon à recevoir des informations sur les services UPnP provenant d'une pluralité de dispositifs dans le réseau domestique, et à générer une base de données indiquant les services de substitution qui peuvent être fournis par chaque dispositif ;
une unité de reconnaissance (730) configurée de façon à recevoir un message d'évènement indiquant qu'un premier dispositif a été incapable de fournir un service demandé par un deuxième dispositif, ce message d'évènement comprenant un contenu de demande de service ;
une unité de recherche (740) configurée de façon à rechercher dans la base de données un service de substitution parmi une pluralité de services fournis par la pluralité de dispositifs dans le réseau domestique ; et
une unité de demande de service (750) configurée de façon à demander le service de substitution provenant d'un troisième dispositif qui fournit le service de substitution, selon un résultat de la recherche par l'unité de recherche (740), cette demande comprenant le contenu de la demande de service provenant du message d'évènement reçu.

16. Appareil selon la revendication 15, comprenant en outre une unité de stockage (760) ayant une base de données stockée dans celle-ci, dans laquelle un service de substitution et une adresse d'un dispositif qui fournit le service de substitution sont mis en correspondance par rapport à chacun des services fournis par les dispositifs dans le réseau domestique ;
dans lequel l'unité de recherche (740) recherche le service de substitution en se reportant à la base de données.

17. Appareil selon la revendication 16, comprenant en outre un générateur de base de données (720) configuré de façon à générer la base de données lorsque l'appareil est connecté au réseau domestique et/ou de façon à mettre à jour la base de données lorsqu'un nouveau dispositif est connecté au réseau.

18. Appareil selon la revendication 17, dans lequel le réseau domestique est un réseau UPnP (Universal Plug and Play) et le générateur de base de données (720) est configuré de façon à générer et/ou à mettre à jour la base de données en se reportant aux documents de description UPnP reçus des dispositifs dans le réseau domestique.

19. Appareil selon la revendication 17 ou 18, dans lequel, si une pluralité de services de substitution existent en correspondance avec un service, le générateur de base de données (720) établit une priorité pour chacun des services de substitution.

20. Appareil selon la revendication 19, dans lequel le générateur de base de données (720) établit la priorité selon les vitesses de réponse du réseau d'une pluralité de dispositifs qui fournissent les services de substitution, ou selon les spécifications matérielles des dispositifs qui fournissent les services de substitution.

21. Appareil selon la revendication 19, dans lequel le générateur de base de données (720) établit une priorité pour les dispositifs qui fournissent les services de substitution, selon une entrée d'utilisateur.

22. Appareil selon l'une quelconque des revendications 15 à 21, comprenant en outre une unité de souscription à des évènements (710) configurée de façon à souscrire à des messages d'évènements pour les services fournis par les dispositifs dans le réseau domestique, dans lequel le réseau domestique est un réseau UPnP (Universal plug and play), et l'unité de reconnaissance reconnaît que le premier dispositif est incapable de fournir le service demandé par le deuxième dispositif en se reportant à un message reçu du premier dispositif.
